# EUROPÄISCHE PATENTSCHRIFT

(11) **EP 0 907 431 B1**
(45) Veröffentlichungstag und Bekanntmachung des Hinweises auf die Patenterteilung: **22.12.1999**
(21) Anmeldenummer: 97923075.2
(22) Anmeldetag: 14.05.1997
(51) Int. Cl.: B21D 5/00, B21D 19/00, B21D 22/00, B21D 5/16, B21D 11/20

(54) **VERFAHREN ZUM UMFORMEN EINES FLÄCHIGEN METALLWERKSTÜCKES**
PROCESS FOR SHAPING A FLAT METAL WORKPIECE
PROCEDE POUR FACONNER UNE PIECE METALLIQUE PLANE

(30) Priorität: 20.05.1996 DE 19620196
(43) Veröffentlichungstag der Anmeldung: 14.04.1999
(73) Patentinhaber: AUDI AG, 85045 Ingolstadt (DE)
(72) Erfinder: SIEGERT, Klaus, D-71063 Sindelfingen (DE); RUDLAFF, Thomas, D-70619 Stuttgart (DE); MNIF, Jamel, D-70372 Stuttgart (DE)
(74) Vertreter: Geissler, Manfred
(86) Internationale Anmeldenummer: EP9702465
(87) Internationale Veröffentlichungsnummer: WO9744147

(56) Entgegenhaltungen:
- EP-A- 0 320 668
- EP-A- 0 648 555
- DE-A- 2 332 287
- US-A- 5 359 872
- PATENT ABSTRACTS OF JAPAN vol. 015, no. 199 (M-1115), 22.Mai 1991 & JP 03 052723 A (TOSHIBA CORP), 6.März 1991,

## Beschreibung

Die Erfindung bezieht sich auf ein Verfahren zum Biegen/Falzen eines flächigen Metallwerkstückes nach dem Oberbegriff des Patentanspruches 1.

Eine Verfahrensweise entsprechend dem Oberbegriff des Patentanspruches 1 ist aus US-A-5 359 872 bekannt.

Aus der Patentliteratur ist des weiteren die DE-AS 23 32 287 (B 21 D 37/16) bekannt geworden, die ein Verfahren zum Tiefziehen von Stahlblechen beschreibt, wobei im Bereich der Formgebung während der Umformung eine Temperaturerhöhung vorgenommen wird. Dies geschieht mit hohen apparativem Aufwand. In der Beschreibungseinleitung dieser Auslegeschrift ist auf 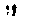 Fertigungstechnik", 1957, Heft 1, Seiten 1 - 6, verwiesen, woraus des weiteren bekannt ist, bei Leichtmetallen, also z. B. auch Aluminium, das Werkstück im Bereich der Formgebung zu erwärmen.

Aus 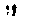 Maschine und Werkzeug", 1950, Nr. 17, Seite 6, ist ein Sondertiefziehverfahren für Aluminium bekannt geworden, bei welchem ebenfalls ausschließlich die Verformungszone des Bleches erwärmt wird.

Aluminium weist gegenüber Stahl ein gänzlich anderes Umformverhalten auf. Dies zeigt sich z. B. in einer niedrigeren Brucheinschnürdehnung, einer geringeren Fähigkeit zum Ausgleich von Spannungskonzentrationen und in einer tieferliegenden Kurve im Grenzformänderungsschaubild. Hierdurch bedingt lassen sich einige Umformoperationen, insbesondere auf dem Gebiet der Blechumformung, schwerer durchführen als bei Stahlblechen. Prinzipiell werden aber bei der Herstellung von Blechformteilen aus Aluminiumlegierungen die gleichen Verfahren eingesetzt, wie bei Stahlblechen, nämlich z. B. Tiefziehen, Streckziehen, Biegen und Falzen. In der Praxis müssen jedoch andere Verfahrensparameter sowie Werkzeuggeometrien verwendet werden, um die Versagensgrenzen des Werkstoffes nicht zu überschreiten. Dies ist auch in der Regel mit höheren Kosten und mit höherem Aufwand verbunden.

Aufgrund ökologischer Aspekte wird im Automobilbau in zunehmendem Maße Aluminium anstatt Stahl eingesetzt. Vor allem die Vereinigung von Leichtbauweise und Recycling ist in wirtschaftlicher Weise mit der Verwendung von Aluminium zu erzielen. Dies insbesondere beim Einsatz von Aluminiumlegierungen zur Gestaltung der Fahrzeugkarosserie.

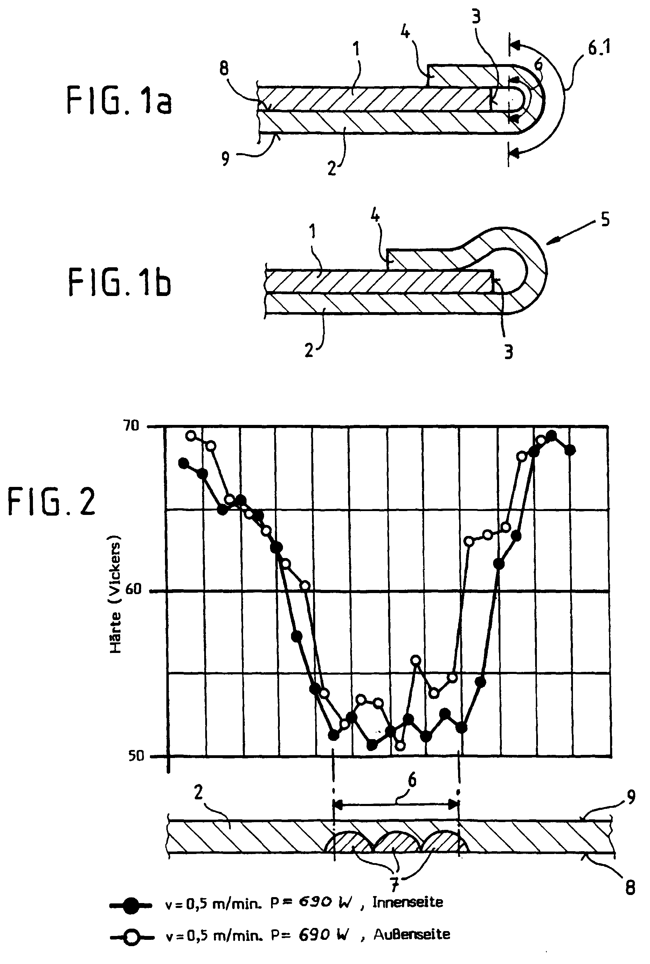

Das Biegen bzw. Falzen, ein häufig angewendetes Verfahren zum Verbinden von Karosserie-Einzelteilen, das im Vergleich zum Tiefziehen nur eine räumlich eng begrenzte (entlang einer Biege-/Falzkante) Umformzone aufweist, im Bereich der Stahlfeinbleche ausgereift ist und in der betrieblichen Praxis kaum Probleme aufwirft, verlangt bei Verwendung von Aluminiumfeinblech differenzierte Bearbeitungsparameter. So müssen z. B. größere Biegeradien (Fig. 1 a) als bei Stahlblech (Fig. 1 b) vorgesehen werden, um die Bildung von Rissen in der Biegezone zu vermeiden. Neben dem fertigungstechnischen Mehraufwand hierfür ist insbesondere auf den mit dieser Maßnahme einhergehenden negativen optischen Eindruck zu verweisen.

Zwar sind nicht aushärtbare Legierungen (AlMn, AlMg, AlMgMn) in der Regel leichter umformbar als aushärtbare Aluminiumlegierungen (AlMgSi, AlCu, AlCuMg, AlZnMg); sie weisen aber bei der Blechumformung Fließfiguren auf und sind somit nicht für Karosserie-Außenhautteile geeignet. Vielfache Verwendung im Automobilbau findet daher die Aluminiumlegierung AlMg 0,4 Si 1,2-k.a.

Aluminiumbauteile aus aushärtbaren Aluminiumlegierungen, z. B. der Legierungstypen AlMgSi (6xxx) und AlCuMg (7xxx), sind durch Lösungsglühen und nachfolgendes schnelles Abkühlen kalt und warm aushärtbar. Hierbei erhöhen sich die Festigkeitswerte, während die Dehnungswerte und somit die Kaltumformbarkeit geringer wird. Ein Anheben der Festigkeitswerte bei Absinken der Dehnungswerte ergibt sich auch bei der Kaltumformung von Aluminiumwerkstoffen.

Der Erfindung liegt die Aufgabe zugrunde, die bekannte Verfahrensweise zum Biegen/Falzen eines flächigen Metallwerkstückes mit thermischer Behandlung einer räumlich relativ eng begrenzten Umformzone des Werkstückes so zu verbessern, daß bei geringem apparativem Aufwand ein flexibler Fertigungsprozeß möglich ist und sehr gute Umformergebnisse erzielbar sind.

Die erfindungsgemäße Lösung ist in den kennzeichnenden Merkmalen des Patentanspruches 1 zu sehen.

Die gezielte Erwärmung eines schmalen Bereiches entlang einer Linie, so daß die zugeführte Wärme zwar lokal zur gewünschten Entfestigung führt, jedoch durch schnelles Abfließen der Wärme eine grobe Ausscheidung z. B. bei AlMgSi-Legierungen von Magnesiumsilizid oder gar eine Rekristallisation vermieden wird, ist ein wesentlicher Teil der Erfindung.

Es wird gerade so viel Wärme eingebracht, daß die Verfestigung durch Kalt- oder Warmauslagerung sowie ggf. durch Kaltumformung zurückgebildet wird und somit erhöhte Dehnungswerte und somit bessere Umformbarkeit gegeben sind. Durch eine minimale linienförmige Wäremeeinbringung und durch die gute Wäremleitfähigkeit von Aluminium bedingt ergibt sich eine schnelle Abkühlung der wärmebeeinflußten Zone, so daß der Werkstoff nach Abkühlung wieder in etwa den Zustand 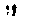 lösungsgeglüht - abgeschreckt" aufweist und somit wieder kalt- oder warm aushartbar ist.

Durch die Verwendung von Strahlwerkzeugen (z. B. Laser, Elektronenstrahl) ist es möglich, die im Werkstoff durch die Kalt- oder Warmaushärtung bei aushärtbaren Aluminiumlegierungen vorhandene Härte gezielt und mit steuerbarer Wärmeleistung örtlich zurückzubilden, so daß sich eine erhöhte Umformbarkeit aufgrund der damit einhergehenden Zunahme der Dehnungswerte ergibt.

Da diese erhöhten Dehnungswerte sich nicht sofort mit dem Erkalten des Werkstückes, sondern erst nach geraumer Zeit zurückbilden, kann in vorteilhafter Weise die eigentliche Umformung ohne weiteres auch erst zeitlich nach der Wärmebehandlung vorgenommen werden. Dies macht den Fertigungsprozeß flexibel. Denkbar ist danach sogar, daß die Wärmebehandlung beim Blech-Platinenhersteller erfolgt, während die spätere Umformung beim Verarbeiter der so vorbehandelten Platinen geschieht.

Um einer Kaltaushärtung mit der damit verbundenen Verringerung der Dehnungswerte und somit der Umformbarkeit zuvorzukommen, sollte die der Wärmebehandlung folgende Kaltumformung möglichst in einem Zeitraum erfolgen, in dem noch keine Verringerung der Dehnungswerte und somit der Umformbarkeit gegeben ist. Dies ist in etwa bis 12 h nach der Wärmebehandlung der Fall. Anschließend an die Kaltumformung kann dann das Werkstück kalt- oder warm ausgehärtet werden, um möglichst hohe Endfestigkeiten zu erzielen.

Vorteilhafte Ausgestaltungen des erfindungsgemäßen Verfahrens sind in den Unteransprüchen beansprucht. Die Erfindung ist nachstehend anhand von Beispielen im einzelnen weiter erläutert. Auf die zugehörige Zeichnung wird Bezug genommen. Diese zeigt in
- Fig. 1: mögliche Falzformen bei Verwendung von Stahlblech (Fig. 1 a) und Aluminiumblech (Fig. 1 b) nach dem Stand der Technik,
- Fig. 2: Härteverlauf auf Innen- und Außenseite eines einseitig laserbehandelten Aluminiumbleches im Bereich einer Biegekante nach der Erfindung,
- Fig. 3: Verlauf der 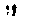 neutralen Faser" nach thermischer Behandlung der Aluminiumblech-Innenseite und
- Fig. 4: thermische Bearbeitung von Außen- und Innenfläche des Aluminiumbleches im Bereich der Biegezone.
- Fig. 5: Rückbildung der Dehnungswerte, d. h. erneute Aushärtung des thermisch behandelten Aluminiumwerkstoffes in Abhängigkeit von der Lagerzeit,

Fig. 1 zeigt beispielsweise im Automobilbau gängige Falzverbindungen. Dabei wird die Verbindung zweier Bleche dadurch hergestellt, daß ein Außenblech 2 um die Kante 3 eines Innenbleches 1 herumgelegt wird. Handelt es sich dabei um Stahlbleche (Fig 1 a), so ist es aufgrund des günstigen Umformverhaltens sogar möglich, den Biegeschenkel 4 des Außenbleches 2 flachzudrücken (Innenradius = 0). Handelt es sich hingegen um eine Aluminiumlegierung (Fig. 1 b), so war es bisher erforderlich, aufgrund des ungünstigen Umformverhaltens einen Tropfenfalz 5 auszubilden. Mit der Erfindung wird es u. a. im Ergebnis möglich sein, trotz Verwendung von Aluminiumlegierungen für Innen- und Außenblech 1,2 einen Falz herzustellen, wie er in Fig. 1 a dargestellt ist. Hierzu wird folgendermaßen vorgegangen:

Zum Einbringen einer definierten Wärmemenge im Bereich einer Biegezone 6 (vgl. Fig. 1 a, 2 und 4) wird als eine in der Leistung steuerbare Wärmequelle ein Strahlwerkzeug eingesetzt. Denkbar wäre hierbei die Verwendung eines auf der Basis-Elektronenstrahlen-arbeitenden Gerätes. Als besonders vorteilhaft ist aber die Verwendung eines Nd : YAG-Lasers anzusehen. Auch der Einsatz eines Diodenlasers ist als günstig anzusehen. Die Leistungsübertragung (z. 8. max 2 kW, Wellenlänge 1,06 µm) vom im Aufbau an sich bekannten Laser zur Bearbeitungsoptik erfolgt vorteilhafterweise über eine Glasfaser mit einem Durchmesser von 1 mm. Zur Fokussierung des Strahls ist eine Optik mit einem Abbildungsverhältnis von 1:1 empfehlenswert. Aufgrund der hohen Reflektion von Aluminium soll die Optik schräg angestellt werden, damit eine Rückkopplung mit dem Laser verhindert wird. Bei einem Laserstrahldurchmesser von 1 mm (Faserdurchmesser = 1 mm, Abbildungsverhältnis = 1 : 1) ergibt sich bei einer Leistung von 2 kW eine Leistungsintensität von ca. 2,5 x 10⁵ Watt pro cm².

Die tatsächliche Erwärmung des Aluminiumbleches hängt insbesondere ab von dessen Absorptionsgrad (abhängig wiederum von Blechtemperatur, Wellenlänge, Polarisation und Einstrahlwinkel), von der eingeregelten Laserleistung und letztlich auch von der Bearbeitungsgeschwindigkeit (Laservorschub). Jedenfalls darf die Wärmeeinbringung nur so hoch sein, daß die Werkstückoberfläche nicht aufgeschmolzen wird.

Wie sich die Energieeinbringung mittels des Lasers auf die Härte der Aluminium-Legierung auswirkt, ist anhand eines Abschnittes des Außenbleches 2 (Blechdicke = 1,25 mm) mit zugeordnetem Härteverlauf-Diagramm in Fig. 2 verdeutlicht. Dabei wurden entlang der späteren Falzlinie so viele (nämlich 3) Laserspuren 7 aufgebracht, und zwar ausschließlich auf der der Kante 3 des Innenbleches 1 zugewandten Innenseite 8 des Außenbleches 2, damit die gesamte Biegezone 6 erfaßt ist. Die Wärmebehandlung erfolgte mit 0,5 m/Minute Vorschubgeschindigkeit und einer Laserleistung von ca. 690 Watt.

Fig. 2 zeigt dabei den Härteverlauf (Vickershärte), wobei aufgrund der nicht vollständigen Durchwärmung auf der dem Laser abgewandten Außenseite 9 des Außenbleches 2 die Zunahme der Dehnungswerte (Abbau der Härte) nicht in gleicher Weise erfolgt ist, wie dies auf der Innenseite 8 der Fall ist. Eine nahezu durchgehende Enthärtung der Blechdicke (von der Innenseite 6 bis zur Außenseite 9 reichend) erbringt, wie dies Versuche bei der Anmelderin gezeigt haben, optimale Arbeitsergebnisse beim Falzen.

Wie aus Fig. 1 a ersichtlich, ist die innere Bogenlänge (Biegezone 6) beträchtlich kürzer als eine äußere Bogenlänge 6.1. Da zudem Biegespannungen und -dehnungen über den gebogenen Bereich hinausreichen, sollte für die thermisch zu behandelnde Biegezone auf die äußere Bogenlänge 6.1 Bezug genommen werden. Damit wäre sichergestellt, daß die Werkstoffenthärtung in jedem Falle den gesamten Bereich auftretender Biegespannungen und -dehnungen erfaßt. Soweit hierfür drei Laserspuren nicht ausreichend sein sollten, kann ohne weiteres eine vierte oder auch fünfte Laserspur hinzugefügt werden.

Die Vorgehensweise, die Laserspuren 7 auf der Innenseite 8 anzuordnen, basieren auf folgender Überlegungen:

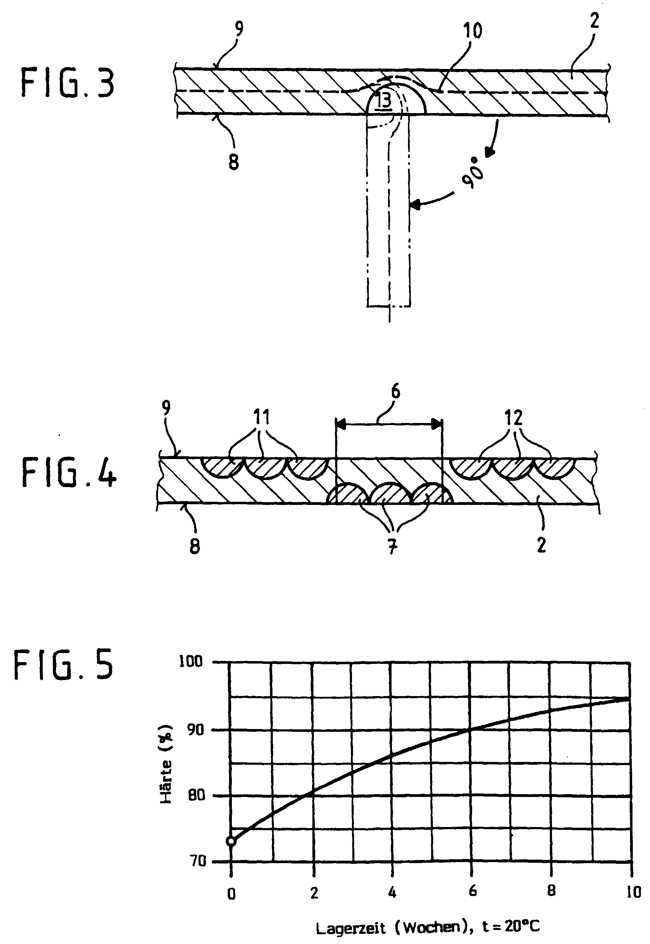

Wenn die Härte des wärmebeeinflußten Bereiches gegen 0 ginge, dann entspräche dieser Bereich einer Flüssigkeit, die den Biegevorgang nicht behindern würde. Das Material der Härte 0 (Vickers) kann anhand dieser Überlegung aus dem Aluminiumblech herausgeschnitten gedacht werden. Dieser Bereich ist in Fig. 3 mit Bezugszeichen 13 gekennzeichnet. Die sogenannte 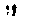 neutrale Faser" 10, die beim Biegen weder Zug noch Druckspannungen ausgesetzt ist, würde sich dann zur Außenseite 9 hin verschieben. Der Biegeradius vergrößert sich dadurch und die Spannungen an der Oberfläche gehen zurück. Bei der Anmelderin durchgeführte Versuch haben dies bestätigt. Es war klar ersichtlich, daß die besten Umformergebnisse mit einer Blechinnenseitenbearbeitung zu erreichen waren. Aber auch mit einer ausschließlichen Laserbeaufschlagung der Außenseite 9 waren die Ergebnisse noch deutlich besser, als die von nicht behandelten Blechen.

Eine Weiterbildung der Erfindung ist in Fig. 4 angedeutet. Dabei sind zusätzlich zu den auf der Innenseite 8 angebrachten Laserspuren 7 jeweils links und rechts außerhalb der Biegezone 6 auf der Außenseite 9 weitere drei Laserspuren 11,12 aufgebracht. Mit dieser weitergehenden Wärmebehandlung wird erreicht, daß diese außenliegenden Laserspuren 11,12 den Randbereich der Biegezone 6 weiter enthärten, so daß dieses enthärtete Material beim Biegevorgang in die Biegezone 6 hineinfließen und dort die plastische Verformung reduzieren kann. Diese an sich mit größerem Aufwand verbundene Vorgehensweise kann im Einzelfall sinnvoll sein.

Mit der Erfindung ist es also möglich, eine örtlich begrenzte und gezielte Wärmebehandlung des umzuformenden Aluminiumwerkstoffes durchzuführen derart, daß
- eine vorhandene Kaltverfestigung des Materials bedingt durch einen vorherigen Umformvorgang rückgängig gemacht wird und die Dehnungswerte angehoben werden, bzw.
- die durch Kalt- oder Warmaushärtung bei aushärtbaren Aluminiumlegierungen vorhandene Härte durch gezielte Wärmebehandlung örtlich zurückgebildet wird, so daß sich eine erhöhte Umformbarkeit aufgrund der Zunahme der Dehnungswerte ergibt.

Der Werkstoff kann also gezielt in den Zustand
- Lösungsgeglüht / abgeschreckt (aushärtbare Legierungen)
   gebracht werden. Der Zustand lösungsgeglüht / abgeschreckt ist nur relativ kurze Zeit gegeben und geht dann fließend über in den Zustand - kalt ausgehärtet - Die Festigkeit der behandelten Zone nimmt also in Abhängigkeit der Auslagerungszeit bis zum Erreichen des Ausgangszustandes wieder zu.

Dieser in Fig. 5 schematisiert in einem Diagramm Härte / Lagerzeit verdeutlichte Umstand hat den positiven Effekt, daß der eigentliche Umformprozeß (Biegen / Falzen) noch innerhalb von Stunden oder ggf. auch Tagen nach der Wärmebehandlung erfolgen kann. In dieser Zeit können die zuvor behandelten Bleche 2 von einer Bearbeitungsstation zur nächsten verbracht bzw. auch zwischengelagert werden. Selbstverständlich wäre auch denkbar, den Umformprozeß unmittelbar an die Wärmebehandlung anzuschließen, sofern dies sinnvoll ist und die anlagetechnischen Voraussetzung hierfür gegeben sind.

## Patentansprüche

1. Verfahren zum Biegen/Falzen eines flächigen Metallwerkstückes (2), wobei das Werkstück (2) im Bereich der Umformung thermisch behandelt wird und die Wärmebehandlung entlang einer Biegezone (6) mittels eines Strahlwerkzeuges erfolgt, **dadurch gekennzeichnet**,
- daß das Werkstück (2) aus einer aushärtbaren Aluminiumlegierung besteht und durch die Wärmebehandlung in den Zustand - lösungsgeglüht abgeschreckt - gebracht wird und
- daß das Biegen/Falzen zeitlich nach der Wärmebehandlung, aber innerhalb eines Zeitraumes erfolgt, in dem der Werkstück-Werkstoff noch erhöhte Dehnungswerte aufweist.

2. Verfahren nach Anspruch 1, **dadurch gekennzeichnet**, daß die Wärmebehandlung auf der Innenseite (8) eines eine Kante (3) eines Innenbleches (1) einfassenden Falzes eines Außenbleches (2) vorgenommen wird.

3. Verfahren nach Anspruch 1, **dadurch gekennzeichnet**, daß die Wärmebehandlung im Bereich der Biegezone (6) von beiden Seiten (8,9) des umzuformenden Werkstückes (2) ausgehend erfolgt.

4. Verfahren nach Anspruch 3, **dadurch gekennzeichnet**, daß die wärmebehandelten Bereiche auf Innen- und Außenseite (8,9) des Werkstückes (2) zueinander versetzt angeordnet sind und dabei zum einen die Biegezone (6) selbst und zum anderen der unmittelbare Bereich zu beiden Seiten der Biegezone (6) erfaßt werden.

5. Verfahren nach einem der Ansprüche 1 - 4, **dadurch gekennzeichnet**, daß die auf eine Seite (8,9) des Werkstückes (2) einwirkende Wärmeleistung derart gewählt ist, daß dies zu einer nahezu über die Werkstückdicke reichenden Enthärtung führt.

## Claims

1. Method for bending and folding a two-dimensional metal workpiece (2), the workpiece (2) being heat-treated in the region that is being shaped and the heat treatment being effected along a bending zone (6) by means of a tool employing a beam, characterised in that
- the workpiece (2) consists of a hardenable aluminium alloy and is converted to the solution-annealed and quenched condition by the heat treatment, and
- the bending and folding takes place after the heat-treatment, but within a time interval in which the workpiece material still exhibits high expansion values.

2. Method according to claim 1, characterised in that the heat treatment is performed on the inner face (8) of a fold in an outer metal sheet (2), said fold bordering one edge (3) of an inner metal sheet (1).

3. Method according to claim 1, characterised in that the heat treatment takes place in the region of the bending zone (6), proceding from both sides (8, 9) of the workpiece (2) being shaped.

4. Method according to claim 3, characterised in that the heat-treated regions on the inner and outer faces (8, 9) of the workpiece (2) are arranged offset from one another and both the bending zone (6) itself and also the immediate region on either side of the bending zone (6) are encompassed.

5. Method according to any of claims 1 to 4, characterised in that the thermal output acting on one side (8, 9) of the workpiece (2) is chosen so that it leads to softening which extends through virtually the thickness of the workpiece.

## Revendications

1. Procédé pour couder/plier une pièce métallique (2) plane, la pièce (2) étant traitée thermiquement dans la zone de la déformation et le traitement thermique s'effectuant le long d'une zone de coudage (6), au moyen d'un outil à rayonnement, caractérisé,
- en ce que la pièce (2) est constituée d'un alliage d'aluminium durcissable et est placée par le traitement thermique à l'état - refroidi brusquement avec recuit de mise en solution, et
- en ce que le coudage-pliage s'effectue temporellement après le traitement thermique, mais dans les limites d'un intervalle de temps dans lequel le matériau de la pièce présente encore des caractéristiques d'allongement augmentées.

2. Procédé selon la revendication 1, caractérisé en ce que le traitement thermique est effectué sur la face intérieure (8) d'un pli, enclosant une arête (3) d'une tôle intérieure (1), d'une tôle extérieure (2).

3. Procédé selon la revendication 1, caractérisé en ce que le traitement thermique est effectué dans la zone de coudage (6), en partant des deux faces (8, 9) de la pièce (2) à façonner.

4. Procédé selon la revendication 3, caractérisé en ce que les zones à soumettre à un traitement thermique, situées sur la face intérieure et extérieure (8, 9) de la pièce (2), sont décalées l'une par rapport à l'autre et, d'une part, la zone de coudage (6) elle-même, et, d'autre part, la zone immédiate des deux côtés de la zone de coudage (6) étant alors impliquées.

5. Procédé selon l'une des revendications 1 - 4, caractérisé en ce que la puissance thermique agissant sur une face (8, 9) de la pièce (2) est choisie de manière que ceci mène à un durcissement intervenant à peu près sur toute l'épaisseur de la pièce façonnée.
